# EUROPÄISCHE PATENTANMELDUNG

(11) **EP 0 911 909 A1**
(43) Veröffentlichungstag der Anmeldung: **28.04.1999**
(21) Anmeldenummer: 98113706.0
(22) Anmeldetag: 22.07.1998
(51) Int. Cl.: H01R 13/514, G02B 6/42

(54) **Hybrid-Steckverbinder**

(30) Priorität: 08.08.1997 DE 19734435
(71) Anmelder: SIEMENS AKTIENGESELLSCHAFT, 80333 München (DE)
(72) Erfinder: Sträb, Martin, 86911 Diessen (DE); Schulte, Marcus, 80809 München (DE); Flieger, Richard, 85134 Stammham (DE); Roth, Michael, 80686 München (DE); Liebich, Ernst, 82269 Geltendorf (DE); Bittner, Werner, 90469 Nürnberg (DE)

(57) **Zusammenfassung**

Hybrid-Steckverbinder mit elektrischen Steckverbindungen und LWL-Steckverbindungen für eine elektronische Einbaueinheit (1), bestehend aus einem Buchsenstecker (4) und einer Winkel-Stiftsteckerleiste (3), bei dem der Buchsenstecker (4) eine Abdeckkappe (6) mit Modulkammern (7, 8, 9) für die Aufnahme elektrischer Buchsenmodule (15, 16) und LWL-Module (11) ist und bei dem die den LWL-Steckern (23) der LWL-Module (11) zugeordneten elektro-optischen Wandler (33) im Boden (31) der Winkel-Stiftsteckerleiste (3) in einer Reihe parallel zu ihren Längswänden (35, 46) auf der Seite auf der sich die Lötanschlüsse (34) befinden so vorgenommen ist, daß die Länge ihrer Anschlußleitungen (53) einschließlich ihrer Lötanschlüsse (34) möglichst klein ist.

## Beschreibung

Die Erfindung bezieht sich auf einen Hybrid-Steckverbinder mit elektrischen Steckverbindungen und LWL(Lichtwellenleiter)-Steckverbindungen für eine elektronische Einbaueinheit, insbesondere ein multimedial ausbaubares Fahrzeugradio, mit einer einen Steckkragen aufweisenden Stiftsteckerleiste und einem in den Steckkragen der Stiftsteckerleiste einsteckbaren Buchsenstecker, bei dem der Buchsenstecker aus einer Abdeckkappe mit Modulkammern für die Aufnahme elektrischer Buchsenmodule und LWL-Module besteht, bei dem die im Boden der Stiftsteckerleiste gehalterten Steckerstifte mit ihren steckkragenseitigen Enden den Steckerbuchsen der Buchsenmodule und die ebenfalls im Boden der Stiftsteckerleiste gehalterten opto-elektrischen Wandler den Lichtwellenleitern der LWL-Module zugeordnet sind und bei dem die aus der Stiftsteckerleiste nach außen herausgeführten Enden der Steckerstifte und elektrischen Anschlüsse der opto-elektrischen Wandler die Lötanschlüsse der Stiftsteckerleiste sind.

Hybrid-Steckverbinder in Modulbauweise dieser Art sind durch die Literaturstelle DE 195 33 295 C1 bekannt. Die Modulbauweise gibt die Möglichkeit, einen solchen Steckverbinder an unterschiedliche geräteabhängige Anforderungen ausbaufähiger elektronischer Einbaueinheiten jeweils durch entsprechende Bestückung mit Buchsenmodulen und LWL-Modulen anzupassen. Besondere Bedeutung kommt hierbei Autoradios zu, die wahlweise mit einem mobilen Sateliten-Fernsehgerät und /oder mit einem mobilen Navigationsgerät zu einer elektronischen Einbaueinheit vereinigt sind. Die Fülle der hier anfallenden Informationen erfordert neben den üblichen elektrischen Steckverbindungen auch LWL-Steckverbindungen, bei denen innerhalb des Steckverbinders LWL-Signalströme mittels elektro-optischer Wandler in elektrische Signalstöme und umgekehrt umgesetzt werden müssen. Beim bekannten Hybrid-Steckverbinder nach der Literaturstelle DE 195 33 295 C1 sind die elektro-optischen Wandler in LWL-Gegenmodulen untergebracht, die ihrerseits wiederum in schachtartigen Ausnehmungen im Boden der Stiftsteckerleiste eingesetzt sind. Abgesehen davon, daß diese Bauweise fertigungstechnisch relativ aufwendig ist, ergeben sich hier bei einer vorgegebenen Anzahl von LWL-Anschlüssen relativ große Abmessungen für einen solchen Steckverbinder. Die durch Sende- und Empfangsdioden verwirklichten elektro-optischen Wandler benötigen außerdem relativ lange Anschlußleitungen zu den ihnen zugeordneten Lötanschlüssen auf der Schaltungsplatine der elektronischen Einbaueinheit. Wie die Praxis zeigt, darf die Länge dieser Anschlußleitungen im Hinblick auf die über sie zu übertragenden hohen Signalfrequenzen, maximal nur 20 mm betragen, sollen unerwünschte Überkopplungen und Signalverzerrungen vermieden werden. Die Einhaltung dieser maximalen Länge wird besonders dadurch erschwert, daß die Stiftsteckerleiste des Steckverbinders meistens nicht mit senkrecht zur Ebene der Schaltungsplatine ausgerichtetem Steckkragen auf die Schaltungsplatine der elektronischen Einbaueinheit aufgesetzt und dort befestigt werden kann, weil für solche elektronischen Einbaueinheiten in der Regel ein seitlicher Steckeranschluß vorgeschrieben wird. Um hier zu hochfrequenzmäßigen einwandfreien Lösungen zu kommen, muß dann von unmittelbar an der Stiftsteckerleiste angebrachten Zwischenplatinen Gebrauch gemacht werden, bei der dann die mit den Anschlüssen der elektro-optischen Wandler unmittelbar zu verbindenden elektronischen Anschlußbauteile auf der Schaltungsplatine der elektronischen Einbaueinheit auf diese Zwischenplatine ausgelagert werden müssen.

Der Erfindung liegt die Aufgabe zugrunde für einen Hybrid-Steckverbinder der geschilderten Art eine weitere Lösung anzugeben, die einerseits bei vorgegebener maximaler Polzahl mit minimalen Abmessungen und andererseits ohne Zwischenplatine auskommt.

Diese Aufgabe wird gemäß der Erfindung für einen solchen Hybrid-Steckverbinder dadurch gelöst, daß die Stiftsteckerleiste eine Winkel-Stiftsteckerleiste ist, bei der die Anordnung der opto-elektrischen Wandler in einer Reihe parallel zu ihren Längsseitenwänden auf der Seite im Boden der Winkel-Stiftsteckerleiste auf der sich die Lötanschlüsse befinden so vorgenommen ist, daß die Länge ihrer Anschlußleitungen einschließlich ihrer Lötanschlüsse möglichst klein ist und daß die auf der Schaltungsplatine der elektronischen Einbaueinheit an deren Rand befestigte Winkel-Stiftsteckerleiste mit ihren Lötanschlüssen unmittelbar in ihnen auf der Schaltungsplatine zugeordnete Lötloch-Anschlüsse eingreifen und hierin verlötet sind.

Der Erfindung liegt die Erkenntnis zugrunde, daß sich auch bei einer Winkel-Stiftsteckerleiste, die bei vorgegebener Polzahl für möglichst kleine Abmessungen ausgelegt ist, die Länge der Anschlußleitungen für die Sende- und Empfangsdioden in außerordentlich vorteilhafter Weise auf maximal 20 mm begrenzen lassen, wenn die elektro-optischen Wandler in der angegebenen Weise unter Fortfall von LWL-Gegenmodulen im Boden der Winkel-Stiftsteckerleiste angeordnet werden.

Zweckmäßige Ausgestaltungen des Gegenstandes nach Patentanspruch 1 sind in den weiteren Patentansprüchen 2 bis 11 angegeben.

Bei vielpoligen Steckverbindern müssen bei Herstellung und Lösen der Steckverbindung nicht unerhebliche Druck-und Zugkräfte aufgebracht werden. Um Hier Abhilfe zu schaffen, ist es beispielsweise durch die Literaturstelle DE 36 04 548 C2 bekannt, von Steckhilfen in Form von Kulissenschiebern Gebrauch zu machen. In Weiterbildung der Erfindung ist im Patentanspruch 12 eine Ausführungsform des Hybrid-Steckverbinders angegeben, bei der als Steckhilfe von einem einen U-förmigen Rahmen aufweisenden Schiebebügel mit Griffkopf Gebrauch gemacht wird, der mit seinen Rahmenschenkeln auf beiden Längsseiten der Abdeckkappe in schlitzförmigen Kulissenführungen geführt und gehaltert ist.

Im folgenden soll anhand eines in der Zeichnung dargestellten Ausführungsbeispiels die Erfindung noch näher erläutert werden. In der Zeichnung bedeuten:
- Fig. 1: eine elektronische Einbaueinheit mit einem Hybrid-Steckverbinder für ein Fahrzeug in perspektivischer Darstellung,
- Fig. 2: der Hybrid-Steckverbinder in Explosionsdarstellung,
- Fig. 3: der in der Abdeckkappe des Hybrid-Steckverbinders vorgesehene Schiebebügel,
- Fig. 4-6: verschiedene perspektivische Ansichten des Hybrid-Steckverbinders
- Fig. 7: die Winkel-Stiftsteckerleiste des Hybrid-Steckverbinders in Aufsicht auf die Unterseite des Bodens,
- Fig. 8: der Schnitt A-A der Winkel-Stiftsteckerleiste des Hybrid-Steckverbinders nach Fig. 7,
- Fig. 9-11: schematische Darstellungen für verschiedene Modulbestückungen der Abdeckkappe des Hybrid-Steckverbinders.

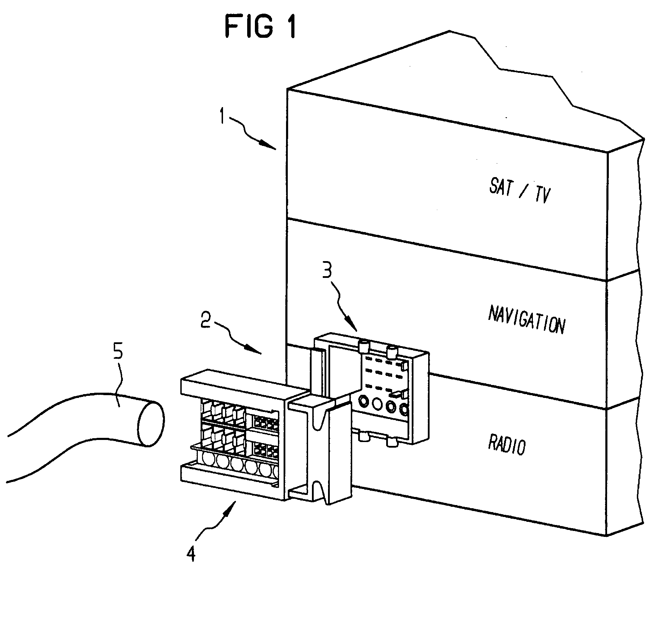

Fig. 1 zeigt eine elektronische Einbaueinheit 1 für ein Kraftfahrzeug, bestehend aus hier unmittelbar übereinander gestapelten einander zugeodneten Baugruppen, nämlich einem Radio RAD, das durch ein mobiles Navigationssystem NAV und einen mobilen Sateliten-Fernsehempfänger SAT / TV erweitert ist. Natürlich können das Navigationssystem NAV und der Sateliten-Fernsehempfänger SAT / TV über Verbindungsleitungen auch vom Radio RAD abgesetzt im Kraftfahrzeug angeordnet sein. Zur Vereinfachung der Montage dieser elektronischen Einbaueinheit 1 in das Kraftfahrzeug und aus Platzgründen sind sämtliche Anschlußverbindungen für diese elektronische Einbaueinheit 1 in einem Hybrid-Steckverbinder 2 konzentriert, dessen Winkel-Stiftsteckerleiste 3 fester Bestandteil des Radios RAD der elektronischen Einbaueinheit 1 ist, in die der Buchsenstecker 4, der mit einer flexiblen Anschlußleitung 5 - lediglich angedeutet - verbunden ist, eingesteckt wird.

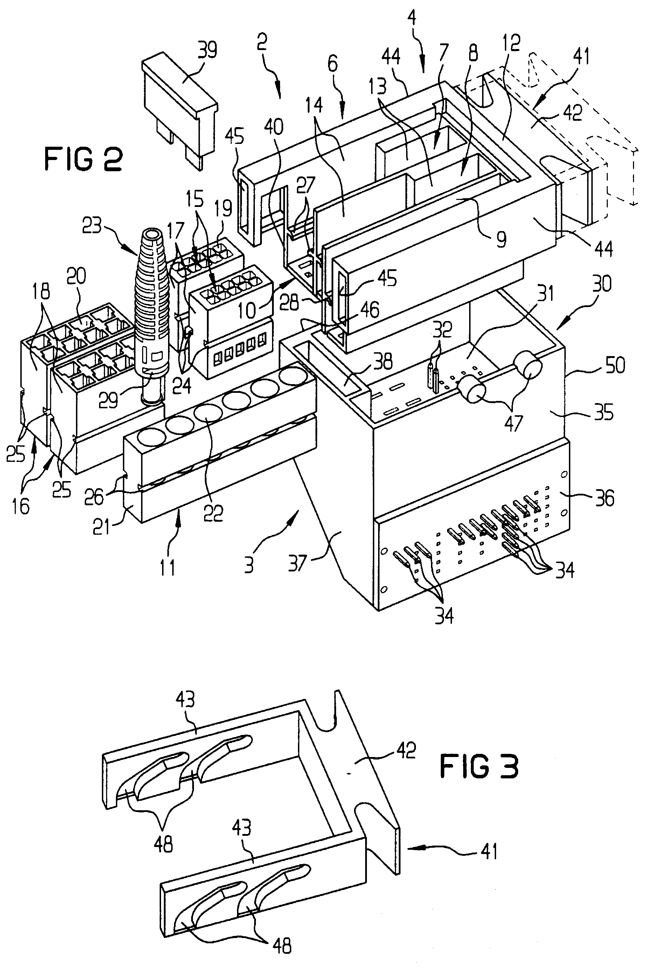

Der in Fig. 1 in groben Umrissen angegebene, ein bevorzugtes Ausführungbeispiel darstellende Hybrid-Steckverbinder 2 läßt in Fig. 2 seine konstruktive Ausgestaltung einschließlich seiner verschiedenen Bauteile gut erkennen. Der Buchsenstecker 4 besteht aus einer Abdeckkappe 6 mit drei Modulkammern 7, 8 und 9, die nach oben und an der vorderen Querseite 10 offen sind. Die Modulkammer 9, die über ihre gesamte Kammerlänge gleiche Kammerbreite aufweist, nimmt den LWL-Modul 11 in sich auf. Die gleich gestalteten Modulkammern 7 und 8 weisen zwischen der vorderen Querseite 10 und der hinteren Querseite 12 der Abdeckkappe 6 zwei Teilbereiche unterschiedlicher Kammerlänge und Kammerbreite, und zwar einen hinteren Teilbereich 13 kleinerer Kammerlänge und Kammerbreite und eine vorderen Teilbereich 14 größerer Kammerlänge und Kammerbreite, auf. Der hintere Teilbereich 13 der Modulkammern 8 und 9 ist jeweils für die Aufnahme eines Buchsenmoduls 15 für kleinere Ströme und deren vorderer Teilbereich 14 jeweils für die Aufnahme eines Buchsenmoduls 16 für größere Ströme vorgesehen.

Die Buchsenmodul-Gehäuse 17 der Buchsenmodule 15 und die Buchsenmodul-Gehäuse 18 der Buchsenmodule 16 weisen in einem Doppelraster angeordnete Aufnahmeschächte 19 bzw. 20 auf, in denen nicht dargestellte Steckerbuchsen gehaltert sind. In entsprechender Weise ist das LWL-Modulgehäuse 21 mit in einer Reihe angeordneten Aufnahmebohrungen 22 für LWL-Stecker 23 versehen, von denen einer ohne Lichtwellenleiter in Fig. 2 dargestellt ist. An beiden Außenlängsseiten der Buchsenmodul-Gehäuse 15 bzw.16 sind Führungsnuten 24 bzw. 25 vorgesehen. In entsprechender Weise sind an beiden Außenlängsseiten des LWL-Modulgehäuses 21 Führungsnuten 26 vorgesehen. Den Führungsnuten 24 bzw. 25 der Buchsenmodul-Gehäuse 15 bzw.16 sind an beiden Längsseiten der Modulkammern 8 und 9 Führungsstege 27 zugeordnet. In gleicher Weise sind den Führungsnuten 26 des LWL-Modulgehäuses 21 an beiden Längsseiten der Modulkammer 9 Führungsstege 28 zugeordnet. Beim Einschieben der Buchsenmodule 15 und 16 in die Modulkammern 7 und 8 einerseits und des LWL-Moduls 11 in die Modulkammer 9 andererseits greifen die einander zugeordneten Führungsnuten und Führungsstege ineinander. Hierdurch sind die Buchsenmodule 15 und 16 sowie der LWL-Modul 11 in den ihnen zugeordneten Modulkammern 7, 8 und 9 geführt und gehaltert. Zugleich stellen die ineinander greifenden Führungsnuten und Führungsstege eine Formschluß-Sekundärsicherung für die Steckerbuchsen in den Buchsenmodulen 15 und 16 einerseits und die LWL-Stecker 23 im LWL-Modul 11 andererseits dar. In Fig. 2 wird dieser Sachverhalt für den LWL-Modul 11 anhand des dargestellten LWL-Steckers 23 verdeutlicht. Der LWL-Stecker 23, der ein Kunststoffteil ist, weist an seinem in einer Aufnahmebohrung 22 des LWL-Moduls 11 steckenden Unterteil auf gegenüberliegenden Seiten Nuten 29 auf. Durch diese Nuten 29 wird gewährleistet, daß der LWL-Modul 11 nur dann in die ihm zugeordnete Modulkammer 9 eingeschoben werden kann, wenn die Nuten 29 mit den Führungsnuten 26 des LWL-Moduls 11 fluchten.

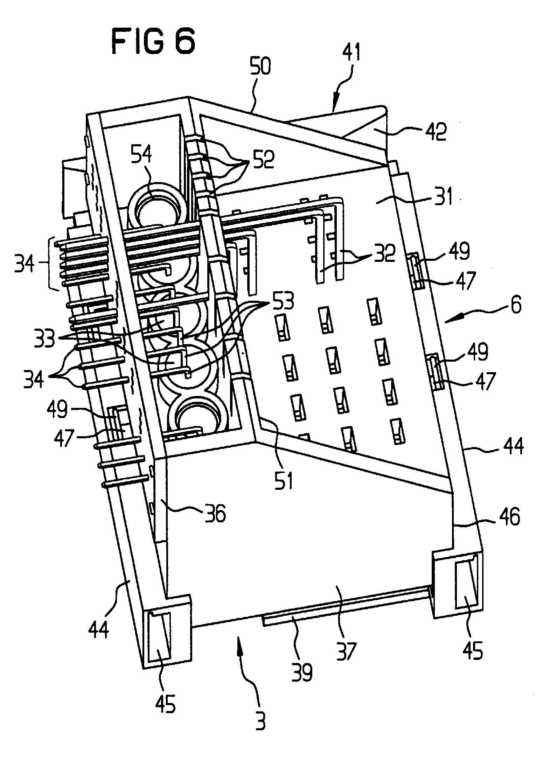

Die Winkel-Stiftsteckerleiste 3 hat für ihre Steckverbindung mit dem Buchsenstecker 4 einen Steckkragen 30 und einen Boden 31, der zugleich der Boden des Steckkragens 30 ist. Im Boden 31 sind die Steckerstifte 32 für die Steckerbuchsen der Buchsenmodule 15 und 16 gehaltert. Ferner sind im Boden 31 auch die dem LWL-Modul 11 zugeordneten elektro-optischen Wandler gehaltert, die nur in den noch zu beschreibenden Fig. 6 bis 8 sichtbar und dort mit 33 bezeichnet sind. Zur Schaffung der Lötanschlüsse 34 sind die Steckerstifte 32 und die in Fig. 6 mit 53 bezeichneten Anschlanschlußleitungen der elektro-optischen Wandler 33 an der Unterseite des Bodens 31 rechtwinkelig abgebogen und mit ihren Lötanschlüsse 34 darstellenden Enden in einer an seiner vorderen Längswand 35 angebrachten Fädelplatte 36 gehaltert.

Der Steckkragen 30 der Winkel-Stiftsteckerleiste 3 ist an der Innenseite der vorderen Querwand 37 mit einer Stecktasche 38 für die Aufnahme einer Flachstecksicherung 39 versehen, die hier für das Radio RAD vorgesehen ist. In Fig. 2 nicht sichtbar sind innerhalb der Stecktasche 38 für die Stecker der Flachstecksicherung 39 zwei Steckerbuchsen vorgesehen, deren rechwinkelig abgebogene Anschlußenden, ebenfalls als Lötanschlüsse 34 in der Fädelplatte 36 gehaltert sind. Mit dieser Anordnung der Flachstecksicherung 39 für das Radio RAD wird in außerordentlich vorteilhafter Weise erreicht, daß der für die Handhabung des Buchsensteckers 4 des Hybrid-Steckverbinders 1 erforderliche Bewegungsraum ebenfalls für die Handhabung der Flachstecksicherung 39, verfügbar ist.

Die Anordnung der Flachstecksicherung 39 in der innerhalb des Steckkragens 30 vorgesehenen Stecktasche 38 macht es erforderlich, an der vorderen Querfläche 10 der Abdeckkappe 6 eine an die Abmessungen der Stecktasche 38 angepaßte Aussparung 40 vorzusehen. Die Stecktasche 38 ist, wie Fig. 2 zeigt, so innerhalb des Steckkragens 30 an der vorderen Querwand 37 der Winkel-Stiftsteckerleiste 3 angeordnet, daß durch die Aussparung 40 in der Abdeckkappe 6 hierdurch lediglich die Modulkammern 7 und 8 etwas verkürzt werden. Ansonsten hätte bei den gegebenen Abmessungen in der Modulkammer 9 kein LWL-Modul 11 für sechs LWL-Stecker 23 untergebracht werden können.

Das in den Fig. 1 und 2 dargestellte Ausführungsbeispiel für einen 42-poligen Hybrid-Steckverbinder 2 ist zur besseren Handhabung bei Herstellung und Wiederaufhebung der Steckverbindung mit einer Steckhilfe in Gestalt eines Schiebebügels 41 versehen, der aus einem U-förmigen Rahmen mit einem Griffkopf 42 besteht. Der Schiebebügel 41 ist in Fig. 3 ebenfalls in Perspektive dargestellt. Er ist mit seinen Rahmenschenkeln 43 auf beiden Längsseiten 44 der Abdeckkappe 6 in schlitzförmigen Kulissenführungen 45 geführt und gehaltert. In Fig. 2 ist der Schiebebügel 41 an der Abdeckkappe 6 in zwei Schiebestellungen dargestellt. Seine Darstellung zeigt ihn einerseits mit ausgezogenen Linien in seiner Endraststellung und andererseits mit unterbrochenen Linien in seiner Vorraststellung. Damit der Schiebebügel 41 an der Abdeckkappe 6 als Steckhilfe wirksam werden kann, muß er ein Gegenlager an der Winkel-Stiftsteckerleiste 3 haben. Hierzu sind am Steckkragen 30, und zwar am oberen Rand an der hinteren Längswand 46 und an der vorderen Längswand 35 Führungsstifte 47 angeformt, die beim Einstecken der Abdeckkappe 6 mit dem Schiebebügel 41 in Vorraststellung in die Führungsnuten 48 in den Rahmenschenkeln 43 des Schiebebügels 41 eingreifen. Durch die schräge Anordnung der Führungsnuten 48 in den Rahmenschenkeln 43 kann nun bei einer Hin- und Herbewegung des Schiebebügels 41 zwischen seiner Vorraststellung und seiner Endraststellung die Abdeckkappe 6 in den Steckkragen 30 der Winkel-Stiftsteckerleiste 3 kraftsparend hinein- und herausbewegt werden.

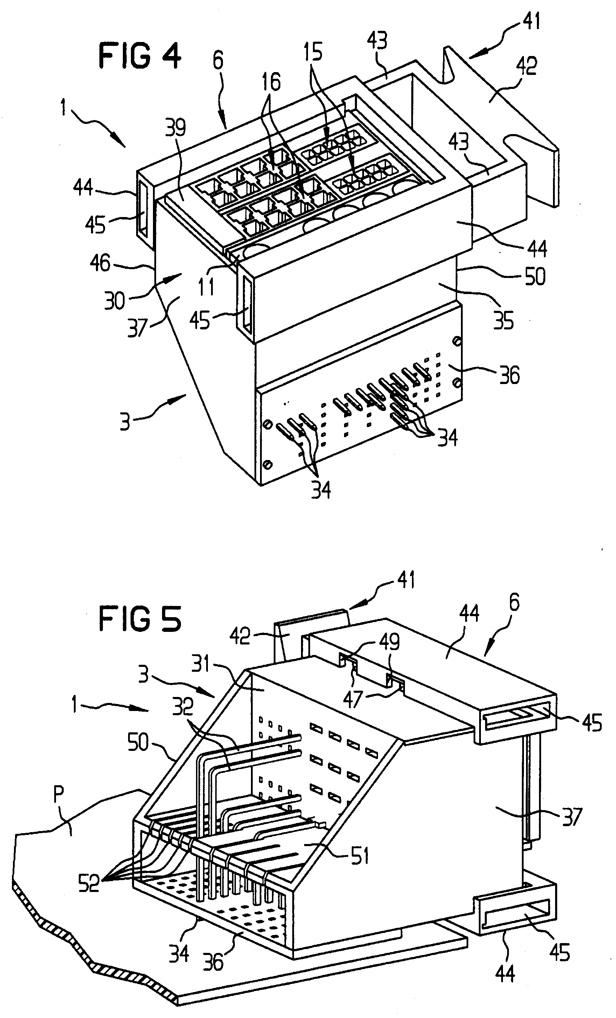

Der Hybrid-Steckverbinder 2 ist in Fig. 4 nochmals im in seinen Einzelteilen zusammengefügten Zustand dargestellt. Hierbei ist die Abdeckkappe 6 mit dem Schiebebügel 41 in Vorraststellung auf den Steckkragen 30 der Winkel-Stiftsteckerleiste aufgesetzt. Durch Einschieben des Schiebebügels 41 in seine Endraststellung wird die Steckverbindung zwischen der Abdeckkappe 6 und der Winkel-Stiftsteckerleiste 3 hergestellt. Im ineinander gesteckten Zustand von Winkel-Stiftsteckerleiste 3 und Abdeckkappe 6 werden die an deren vorderen Querseite 10 offenen Modulkammern 7, 8 und 9 von der vorderen Querwand 37 der Winkel-Stiftsteckerleiste 3 abgedeckt.

Die Ansicht des Hybrid-Steckverbinders 1 in Fig. 5 gibt die Sicht auf die Unterseite des Bodens 31 der Winkel-Stiftsteckerleiste 3 und der Abdeckkappe 6 frei. An der Unterseite der Abdeckkappe 6 sind im Bereich ihrer Kulissenführungen 45 Öffnungen 49 sichtbar, durch die hindurch die am oberen Rand des Steckkragens 30 der Winkel-Stiftsteckerleiste 3 angeformten Führungsstifte 46 in die Führungsnuten 48 in den Rahmenschenkeln 43 des Schiebebügels 41 eingreifen.

Zwischen der vorderen Querwand 37 und der hintere Querwand 50 ist in zum Boden 31 senkrechter Ausrichtung eine Kammwand 51 mit Wandschlitzen 52 vorgesehen. In den Wandschlitzen 52 sind die oberhalb der Kammwand 51 an der Unterseite des Bodens 31 austretenden Steckerstifte 32 mit ihren senkrecht nach unten abgewinkelten Teilstücken geführt. Diese abgewinkelten Teilstücke der Steckerstifte 32, deren Enden die Lötanschlüsse 34 bilden, sind in der parallel zur Kammwand 51 unterhalb der Kammwand 51 angeordneten Fädelplatte 36 zusätzlich gehaltert.

In dem Teilbereich des Bodens 31 zwischen der Kammwand 51 und der Fädelplatte 36, sind, wie die weitere Ansicht des Hybrid-Steckverbinders 1 in Fig. 6 zeigt, die dem LWL-Modul 11 zugeordneten elektro-optischen Wandler 33 mit ihren Anschlußleitungen 53 in rohrförmigen Ausformungen 54 des Bodens 31 angeordnet. Die Anschlußleitungen 53 der elektro-optischen Wandler 33, deren Enden Lötanschlüsse 34 sind, sind ebenfalls senkrecht nach unten abgewinkelt und in der Fädelplatte 36 gehaltert. Fig. 6 läßt besonders gut erkennen, daß die beim Hybrid-Steckverbinder 2 gewählte Anordnung für die LWL-Steckverbindung, bei der die elektro-optischen Wandler 33 im Boden 31 der Winkel-Stiftsteckerleiste 3 in unmittelbarer Nähe der Fädelplatte 36 angeordnet sind, mit einer minimalen Länge für ihre Anschlußleitungen 53 einschließlich Lötanschlüssen 34 auskommen. Beim hier dargestellten Ausführungbeispiel für einen Hybrid-Steckverbinder 2 ist diese Länge < 20 mm. Damit sind hochfrequenzmäßige Voraussetzungen dafür geschaffen, daß die Winkel-Stiftsteckerleiste 3, wie das in Fig. 5 dargestellt ist, unter Verzicht auf eine Zwischenplatine unmittelbar auf die Schaltungsplatine P der elektronischen Einbaueinheit 1 an deren Rand mit seiner Fädelplatte 36 aufgesetzt werden kann. Dabei greift dann die Winkel-Stiftsteckerleiste 3 mit ihren Lötanschlüssen 34 zu deren Verlötung in diesen auf der Schaltungsplatine P angeordnete, in Fig. 5 nicht sichtbare Lötloch-Anschlüsse ein.

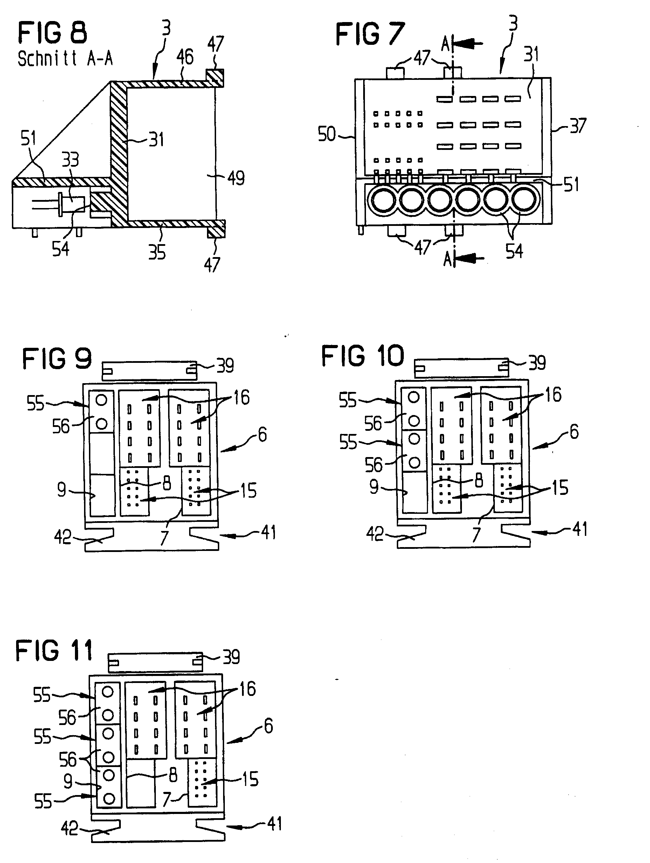

Fig. 7 zeigt in Ergänzung zu Fig. 6 die Winkel-Stiftsteckerleiste 3 ohne eingezeichnete Steckerstifte und elektro-optische Wandler in Aufsicht auf die Unterseite des Bodens 31 mit der Kammwand 51. Der in Fig. 7 angegebene Schnitt A-A ist in Fig. 8 dargestellt. Am Boden 31 unten auf seiten der hier nicht dargestellten Fädelplatte sind insgesamt sechs rohrförmigen Ausformungen 54 vorhanden, in die sechs Sende- und Empfangs-Fotodioden darstellenden elektro-optischen Wandler 33 eingesetzt werden können. Die Bestückung der rohrförmigen Ausformungen 54 mit elekto-optischen Wandlern 33 wird jeweils in Übereinstimmung mit der Bestückung des LWL-Moduls 11 mit maximal sechs LWL-Steckern 23 vorgenommen.

Die Fig. 9-11 zeigen schließlich noch drei Varianten von vielen Modul-Bestückungsmöglichkeiten des Hybrid-Steckverbinders 1, die sich von der Modul-Bestückung des Hybrid-Steckverbinders 1, wie sie die Fig. 2 und 4 zeigen, unterscheiden. Dargestellt ist hierbei jeweils eine Aufsicht auf die Abdeckkappe 6 mit dem Schiebebügel 41 und der Flachstecksicherung 39. Wesentlicher Unterschied zur Modul-Bestückung des Hybrid-Steckverbinders 1 nach Fig. 2 und 4 sind die hier vorgesehenen, hinsichtlich ihrer LWL-Modulgehäuse 56 gleiche Abmessungen aufweisenden LWL-Module 55, für lediglich zwei LWL-Stecker 23. Beim Bestückungsbeispiel nach Fig. 9 wird von zwei Buchsenmodulen 15 und 16 sowie von einem LWL-Modul 55 Gebrach gemacht. Hiervon unterscheidet sich das Bestückungsbeispiel nach Fig. 10 dadurch, daß in der Modulkammer 9 zwei LWL-Module 55 hintereinander angeordnet sind. Beim Bestückungsbeispiel nach Fig. 11 sind in der Modulkammer 9 drei LWL-Module 55 hintereinander angeordnet. Außerdem ist in die Modulkammer 8 lediglich ein Buchsenmodul 16 eingeschoben. Die geringsten Längenabmessungen der Abdeckkappe 6 für maximal sechs LWL-Stecker 23 werden dann erreicht, wenn von einem LWL-Modul 11 Gebrauch gemacht wird. Aus fertigungstechnischen Gründen benötigen nämlich drei hintereinander angeordnete LWL-Module 55 eine größere Gesamtlänge als ein LWL-Modul 11.

### Bezugszeichenliste

- 1: = Einbaueinheit
- 2: = Hybrid-Steckverbinder
- 3: = Winkel-Stiftsteckerleiste
- 4: = Buchsenstecker
- 5: = Anschlußleitung
- 6: = Abdeckkappe
- 7, 8, 9: = Modulkammer
- 10, 12: = Querseite
- 11, 55: = LWL-Modul
- 13, 14: = Teilbereich
- 15, 16: = Buchsenmodul
- 17, 18: = Buchsenmodul-Gehäuse
- 19, 20: = Aufnahmeschacht
- 21, 56: = LWL-Modulgehäuse
- 22: = Aufnahmebohrung
- 23: = LWL-Stecker
- 24, 25, 26, 48: = Führungsnut
- 27, 28: = Führungssteg
- 29: = Nut
- 30: = Steckkragen
- 31: = Boden
- 32: = Steckerstift
- 33: = Wandler
- 34: = Lötanschluß
- 35, 46: = Längswand
- 36: = Fädelplatte
- 37, 50: = Querwand
- 38: = Stecktasche
- 39: = Flachstecksicherung
- 40: = Aussparung
- 41: = Schiebebügel
- 42: = Griffkopf
- 43: = Rahmenschenkel
- 44: = Längsseite
- 45: = Kulissenführung
- 47: = Führungsstift
- 49: = Öffnung
- 51: = Kammerwand
- 52: = Wandschlitz
- 53: = Anschlußleitung
- 54: = Ausformung
- P: = Schaltungsplatine
- RAD: = Radio
- NAV: = Navigationssystem
- SAT / TV: = Sateliten-Fernsehempfänger

## Patentansprüche

1. Hybrid-Steckverbinder mit elektrischen Steckverbindungen und LWL-Steckverbindungen für eine elektronische Einbaueinheit (1), insbesondere ein multimedial ausbaubares Fahrzeugradio, mit einer einen Steckkragen (30) aufweisenden Stiftsteckerleiste und einem in den Steckkragen (30) der Stiftsteckerleiste einsteckbaren Buchsenstecker (4),
bei dem der Buchsenstecker (4) aus einer Abdeckkappe (6) mit Modulkammern (7, 8, 9) für die Aufnahme elektrischer Buchsenmodule (15, 16) und LWL-Module (11, 55) besteht,
bei dem die im Boden (31) der Stiftsteckerleiste gehalterten Steckerstifte (32) mit ihren steckkragenseitigen Enden den Steckerbuchsen der Buchsenmodule (15, 16) und die ebenfalls im Boden (31) der Stiftsteckerleiste gehalterten opto-elektrischen Wandler (33) den Lichtwellenleitern der LWL-Module (11, 55) zugeordnet sind und
bei dem die aus der Stiftsteckerleiste nach außen herausgeführten Enden der Steckerstifte (32) und der elektrischen Anschlußleitungen (53) der opto-elektrischen Wandler (33) die Lötanschlüsse (34) der Stiftsteckerleiste sind,
**dadurch gekennzeichnet,** daß
die Stiftsteckerleiste eine Winkel-Stiftsteckerleiste (3) ist, bei der die Anordnung der elektro-optischen Wandler (33) in einer Reihe parallel zu zu ihren Längswänden (35, 46) auf der Seite im Boden (31) der Winkel-Stiftsteckerleiste (3) auf der sich die Lötanschlüsse (34) befinden so vorgenommen ist, daß die Länge ihrer Anschlußleitungen (53) einschließlich ihrer Lötanschlüsse (34) möglichst klein ist und
die auf der Schaltungsplatine (P) der elektronischen Einbaueinheit (1) an deren Rand befestigte Winkel-Stiftsteckerleiste (3) mit ihren Lötanschlüssen (34) unmittelbar in ihnen auf der Schaltungsplatine (P) zugeordnete Lötloch-Anschlüsse eingreifen und hierin verlötet sind.

2. Hybrid-Steckverbinder nach Anspruch 1,
**dadurch gekennzeichnet,** daß
daß die Länge der Anschlußleitungen (53) der elektro-optischen Wandler (33) einschließlich ihrer Lötanschlüsse (34) maximal 20 mm beträgt.

3. Hybrid-Steckverbinder nach Anspruch 1 oder 2,
**dadurch gekennzeichnet,** daß
daß die Lötanschlüsse (34) in einer senkrecht zum Boden (31) der Winkel-Stiftsteckerleiste (3) ausgerichteten und an der Winkel-Stiftsteckerleiste (3) befestigten Fädelplatte (36) gehaltert sind und
die auf der Schaltungsplatine (P) der elektronischen Einbaueinheit (1) befestigte Winkel-Stiftsteckerleiste (3) mit ihrer Fädelplatte (36) auf der Schaltungsplatine (P) aufsitzt.

4. Hybrid-Steckverbinder nach einem der vorhergehenden Ansprüche,
**dadurch gekennzeichnet,** daß
die Abdeckkappe (6), deren Längsseiten (44) im miteinander verbundenen Zustand von Abdeckkappe (6) und Winkel-Stiftsteckerleiste (3) parallel zu den Längswänden (35, 46) der Winkel-Stiftsteckerleiste (3) ausgerichtet sind, wenigstens zwei sich parallel zu den Längsseiten (44) der Abdeckkappe (6) erstreckende Modulkammern (7, 8, 9) aufweist,
die Modulkammern (7, 8, 9) zum Einführen der Buchsenmodule (15, 16) und der LWL-Module (11, 55) an der vorderen Querseite (10) der Abdeckkappe (6) offen sind und
die Modulkammern (7, 8, 9) für die Aufnahme der Buchsenmodule (15, 16) zwischen der vorderen und hinteren Querseite (10, 12) der Abdeckkappe (6) zwei Teilbereiche 13, 14 unterschiedlicher Kammerlänge und/oder Kammerbreite aufweist, und zwar einen hinteren Teilbereich (13) kleinerer Kammerlänge und/oder Kammerbreite für einen hinsichtlich seiner Steckerbuchsen für kleinere Ströme ausgelegten Buchsenmodul (15) und einen vorderen Teilbereich (14) größerer Kammerlänge und/oder Kammerbreite für einen hinsichtlich seiner Steckerbuchsen für größere Ströme ausgelegten Buchsenmodul (16).

5. Hybrid-Steckverbinder nach Anspruch 4,
**dadurch gekennzeichnet,** daß
die Abdeckkappe (6) drei zueinander parallele Modulkammern (7, 8, 9) aufweist, und zwar zwei gleiche Modulkammern (7, 8) für die Aufnahme von Buchsenmodulen (15, 16) und eine Modulkammer (9) für die Aufnahme von LWL-Modulen (11, 55).

6. Hybrid-Steckverbinder nach einem der vorhergehenden Ansprüche,
**dadurch gekennzeichnet,** daß
die Modulkammern (7, 8, 9) entlang ihrer Längsseiten Führungsstege (27, 28) und die Buchsenmodul-Gehäuse (17, 18) sowie die LWL-Modulgehäuse (21, 56) entlang ihrer Längsseiten Führungsnuten (24, 25, 26) aufweisen und
die Buchsenmodule (15, 16) sowie die LWL-Module (11, 55) mit ihren Führungsnuten (24, 25, 26) in den Führungsstegen (27, 28) der Modulkammern (7, 8, 9) geführt und gehaltert sind.

7. Hybrid-Steckverbinder nach Anspruch 6,
**dadurch gekennzeichnet,** daß
die beim Einführen der Buchsenmodule (15, 16) und LWL-Module (11, 55) in die Modulkammern (7, 8, 9) der Abdeckkappe (6) ineinandergreifenden Führungsnuten (24, 25, 26) und Führungsstege (27, 28) zugleich eine Sekundärsicherung für die in den Buchsenmodul-Gehäusen (17, 18) bzw. LWL-Modulgehäusen (21, 56) gehalterten Steckerbuchsen bzw. LWL-Stecker (23) darstellen.

8. Hybrid-Steckverbinder nach einem der vorhergehenden Ansprüche,
**dadurch gekennzeichnet,** daß
die Winkel-Stiftsteckerleiste (3) an einer (37) ihrer beiden Querwände (37, 50) auf seiten des Steckkragens (30) eine Stecktasche (38) mit Steckerbuchsen für eine Flachstecksicherung (39) aufweist und
die Anschlüsse dieser Steckerbuchsen ebenfalls als Lötanschlüsse (34) nach außen aus der Winkel-Stiftsteckerleiste (3) herausgeführt sind.

9. Hybrid-Steckverbinder nach Anspruch 8,
**dadurch gekennzeichnet,** daß
die Stecktasche (38) für die Flachstecksicherung (39) im Bereich des Steckkragens (30) auf der Innenseite der Querwand (37) der Winkel-Stiftsteckerleiste (3) vorgesehen ist, die die auf dieser Seite offenen Modulkammern (7, 8, 9) der Abdeckkappe (6) im miteinander verbundenen Zustand von Abdeckkappe (6) und Winkel-Stiftsteckerleiste (3) abdeckt und
die Abdeckkappe (6) an ihrer vorderen Querseite (10) eine Aussparung (40) für die Stecktasche (38) aufweist.

10. Hybrid-Steckverbinder nach einem der vorhergehenden Ansprüche,
**dadurch gekennzeichnet,** daß
die LWL-Module (55) für die Aufnahme von zwei LWL-Stecker (23) bemessen sind und
maximal drei solcher gleiche Abmessungen aufweisende LWL-Module (55) hintereinander in der hierfür in der Abdeckkappe (6) vorgesehenen Modulkammer (9) anordenbar sind.

11. Hybrid-Steckverbinder nach einem der Ansprüche 1 bis 9,
**dadurch gekennzeichnet,** daß
in der Modulkammer (9) für die LWL-Module der Abdeckkappe (6) ein einziger LWL-Modul (11) für sechs in einer Reihe hintereinander angeordnete LWL-Stecker (23) vorgesehen ist und
dieser LWL-Modul (11) lediglich nach Bedarf mit zwei bis sechs LWL-Steckern (23) bestückt ist.

12. Hybrid-Steckverbinder nach einem der vorhergehenden Ansprüche,
**dadurch gekennzeichnet,** daß
die Abdeckkappe (6) mit einer Steckhilfe versehen ist, die aus einem einen U-förmigen Rahmen aufweisenden Schiebebügel (41) mit Griffkopf (42) besteht, der mit seinen Rahmenschenkeln (43) auf beiden Längsseiten (44) der Abdeckkappe (6) in schlitzförmigen Kulissenführungen (45) geführt und gehaltert ist und
der Schiebebügel (41) im vollständig in die Abdeckkappe (6) eingeschobenen Zustand eine Endraststellung und in einem teilweise aus der Abdeckkappe (6) herausziehbaren Zustand eine Vorraststellung hat,
die Winkel-Stiftsteckerleiste (3) am steckkragenseitigen oberen Rand ihrer beiden Längswände (35, 46) mit angeformten Führungsstiften (47) versehen ist, die beim Einstecken der Abdeckkappe (6) mit dem Schiebebügel (41) in Vorraststellung in Führungsnuten (48) in den Rahmenschenkeln (43) des Schiebebügels (41) eingreifen und
die Führungsnuten (48) in den Rahmenschenkeln (43) des Schiebebügels (41) so gestaltet sind, daß die Abdeckkappe (6) bei einer Hin- und Herbewegung des Schiebebügels (41) zwischen seiner Vor- und Endraststellung in den Steckkragen (30) der Winkel-Stiftsteckerleiste (3) hinein- und herausbewegbar ist.
